**Europäisches Patentamt**

**European Patent Office** ·

**Office européen des brevets**

(11) Veröffentlichungsnummer : **0 204 856**
**B1**

(12) **EUROPÄISCHE PATENTSCHRIFT**

(45) Veröffentlichungstag der Patentschrift :
**02.03.88**

(51) Int. Cl.⁴ : **G 01 P   5/00**

(21) Anmeldenummer : **85107190.2**

(22) Anmeldetag : **11.06.85**

(54) Verfahren zur Bestimmung der Horizontaleigengeschwindigkeit von Hubschraubern in niedrigen Geschwindigkeitsbereichen.

(43) Veröffentlichungstag der Anmeldung :
**17.12.86 Patentblatt 86/51**

(45) Bekanntmachung des Hinweises auf die Patenterteilung : **02.03.88 Patentblatt 88/09**

(84) Benannte Vertragsstaaten :
**BE CH DE FR GB IT LI LU NL SE**

(56) Entgegenhaltungen :
**EP-A- 0 094 778**
**FR-A- 2 282 644**
**FR-A- 2 444 275**
**GB-A- 1 181 669**

(73) Patentinhaber : **LITEF GmbH**
**Lörracher Strasse 18**
**D-7800 Freiburg/Br. (DE)**

(72) Erfinder : **Hassenpflug, Wolfgang, Dipl.-Ing.**
**Reutestrasse 2**
**D-7800 Freiburg (DE)**
Erfinder : **Schwäble, Rainer, Dr.**
**Belchenstrasse 18**
**D-7812 Bad Krozingen (DE)**

(74) Vertreter : **Patentanwälte TER MEER - MÜLLER - STEINMEISTER**
**Mauerkircherstrasse 45**
**D-8000 München 80 (DE)**

EP 0 204 856 B1

## Beschreibung

Die Erfindung betrifft ein Verfahren zur Bestimmung der Horizontal-Eigengeschwindigkeit von Hubschraubern in niedrigen Geschwindigkeitsbereichen. Ähnliche Verfahren, die ebenfalls auf einer analytischen Auswertung beruhen, sind z. B. aus FR-A-2282644 und EP-A-0094778 bekannt. Gemäß FR-A-2282644 werden unter anderem Längs- und Quersteuerwerte zur Bestimmung der Geschwindigkeit herangezogen.

Bedingt durch ihren charakteristischen Aufbau zeigen Hubschrauber mit Abnahme der Eigengeschwindigkeit eine wachsende Instabilität im Flugverhalten. Besonders im Schwebeflug ist die Steueraktivität des Piloten regelmäßig sehr hoch und entsprechend wächst dessen Belastung. Da die Steuereingaben aber direkt von äußeren Störungen (insbesondere Wind !) abhängen, stellt die Eigengeschwindigkeit ein wichtiges Korrektiv dar. Die genaue Erfassung und Sichtdarstellung der Eigengeschwindigkeit verursacht in niedrigen Geschwindigkeitsbereichen jedoch erhebliche Probleme. Die Kenntnis der Luftgeschwindigkeit ist ferner Voraussetzung für die Berechnung von Richtungskorrekturen bei der Waffenablieferung im Falle von Kampfhubschraubern. Auch erlaubt die kontinuierliche Erfassung der Windgeschwindigkeit bei Ausfall des Doppler-Radars die Schätzung der Geschwindigkeit über Grund.

Während im hohen Geschwindigkeitsbereich (Richtwert : V > 20 m/s) der Einsatz eines konventionellen Luftdatensystems (basierend auf Druckdifferenz- und Temperaturmessung ; gebräuchlich bei Starrflüglern) ausreicht, müssen im Niedriggeschwindigkeitsbereich (Richtwert : V < 20 m/s) andere technische Lösungen Anwendung finden. Dies ist im wesentlichen zurückzuführen auf

— den begrenzten Arbeitsbereich von handelsüblichen Pitot-Static-Rohren, für die die Forderung gilt : V > 10 m/s,

— Störeinflüsse durch den Rotorabwind und

— zusätzliche Freiheitsgrade in der Bewegungsrichtung von Hubschraubern (Rückwärts-, Seitwärts- und Senkrechtflug).

Zur Bestimmung der Eigengeschwindigkeit, das heißt der Geschwindigkeit des Hubschraubers gegenüber der umgebenden Luft für den niedrigen Geschwindigkeitsbereich (V < 20 m/s) sind zur Zeit zwei technische Lösungen unter den Bezeichnungen

— LASSIE (Low Air Speed Sensing and Indicating Equipment) ; Produkt der Firma GEC (England) ; vgl. J. Kaletka : « Evaluation of the Helicopter Low Air Speed Sytem LASSIE » ; Rotorcraft and Powered Lift Aircraft Forum, Garmisch-Partenkirchen 1982, und

— LORAS (LOw Range Air Speed System) ; Produkt der Firma PACER (U.S.A.) ; vgl. P. J. Onksen : « Helicopter Omnidirectional Air Data Systems », IEEE 1983, bekannt. Bei beiden Systemen handelt es sich um mechanische Lösungen unter Ausnutzung der konventionellen Luftdatentechnik (Differenzdruckmessung und Temperaturmessung).

Das System LASSIE basiert auf der klassischen Luftdatenmessung mit Pitot-Static-Rohr, nutzt jedoch eine um zwei Achsen drehbare Sonde. Die Sonde ist mit einem kleinen Leitwerk versehen, so daß sie sich im Luftstrom selbst ausrichten kann. Meßgrößen sind der Schiebewinkel β, der Anstellwinkel α sowie mittels Temperatur- und Druckdifferenzmessung die Geschwindigkeit V.

Kernstück der Meßanordnung beim System LORAS dagegen ist eine zweiarmige Sonde, die sich über dem Rotor mit konstanter Geschwindigkeit dreht. Eine feste Verbindung zwischen der Sonde und dem Hubschraubergehäuse wird über ein im Rotormast gelagertes, unbewegliches Standrohr hergestellt. Die beiden Sensorarme liegen diametral. An den Enden befindet sich je ein tangential empfindliches Venturi-Rohr. Beide Sensoren sind mit einem Differenzdruckmesser verbunden. Dreht sich die Sonde mit konstanter Geschwindigkeit, so erhält man im Schwebeflug die Druckdifferenz Null, im Vorwärts- und Seitwärtsflug je ein periodisches Differenzsignal mit entprechender Phasenlage. Die Signalamplitude ist ein Maß für die horizontale Eigengeschwindigkeit, während die Phase die Anströmrichtung wiedergibt.

Bei den Systemen LASSIE und LORAS handelt es sich um mechanische Lösungen, bei denen die Eigengeschwindigkeit nur außen gemessen werden kann, d. h. die eigentlichen Meßelemente müssen an der Außenhaut der Kabine bzw. mit Durchführung durch den Rotorschaft oberhalb des Rotors montiert werden. Außen liegende Meßelemente bedürfen aber nicht nur einer besonderen Wartung und Pflege ; sie sind auch besonders empfindlich gegen Beschädigungen. Insbesondere mit Blick auf militärische Anwendungen ist man besonders bestrebt, außen liegende Meßvorrichtungen wegen der hohen Verwundbarkeit zu vermeiden.

Der Erfindung liegt die Aufgabe zugrunde, ein System bzw. ein Verfahren zur Bestimmung der Eigengeschwindigkeit von Hubschraubern in niedrigen Geschwindigkeitsbereichen anzugeben, bei dem außen liegende Meßvorrichtungen weitgehend vermieden werden und das gleichwohl mit vergleichsweise sehr hoher Genauigkeit Eigengeschwindigkeitswerte in wenigstens zwei Achsen liefert.

Die im Patentanspruch 1 angegebene erfindungsgemäße Lehre läßt sich als analytische Lösung oder als analytisches System für den Niedriggeschwindigkeitsbereich (V < 20 m/s) charakterisieren.

Ausgangspunkt für die erfindungsgemäße Lösung sind einerseits Untersuchungen über die Abhängigkeit der einzelnen Steuerfunktionen des Hubschraubers von bestimmten konstruktionsbedingten Kenndaten sowie die gegenseitige Verkopplung der Steuerdaten. Aus den daraus gewonnenen Erkenntnissen werden Kalibrationsfunktionen erstellt und gespeichert. Und schließlich werden die aktuellen Steuerdaten aus den entsprechenden Bewegungen von durch den Piloten betätigten Steuerhebeln über Meßwertgeber, insbesondere über Spannungsfunktionsgeneratoren (z. B. Potentiometer) über Drehmelder (Synchros), über Resolver oder an sich bekannte induktive Geber erfaßt und einer erfindungsgemäßen Verarbeitung zugeführt, als deren Ergebnis die Geschwindigkeitswerte erhalten werden.

Die Erfindung wird in einer beispielsweisen Ausführungsform nachfolgend unter Bezug auf die Zeichnungen näher erläutert. Es zeigen :

Fig. 1 ein Rotor-Leistungsdiagramm für einen bekannten Hubschrauber ;

Fig. 2 und 3 Diagramme zur Ermittlung der Verkopplungen der beiden typischen Steuerwinkel (Längssteuer und Quersteuer) über den Durchfluß ;

Fig. 4 ein Block-Funktionsschaltbild für das erfindungsgemäße Verfahren ;

Fig. 5 ein Kalibrationsdiagramm zur Bestimmung des Betrags der Geschwindigkeit im niedrigen Geschwindigkeitsbereich in Abhängigkeit vom Kollektiv ;

Fig. 6 und 7 den Fig. 2 und 3 entsprechende Kalibrationsdiagramme zur Ermittlung des Winkelwerts (Phasenwinkels) der Horizontalgeschwindigkeit durch Interpolation bzw. Schnittbildung ; und

Fig. 8 und 9 den aus den Geschwindigkeitsprofilen der Fig. 6 und 7 graphisch ermittelten Verlauf der Längs- und Quersteuerfunktion für einen bestimmten Wert des Betrags der Horizontalgeschwindigkeit.

Allgemein erfolgt die Steuerung eines Hubschraubers über vier Funktionen, nämlich

— Kollektiv $\theta_0$ (Anwinkelung der Rotorblätter um denselben Betrag),

— Längssteuer $\theta_s$ (Periodische Blattwinkelverstellung im Sinus-Mode),

— Quersteuer $\theta_c$ (Periodische Blattwinkelverstellung im Cosinus-Mode),

— Pedale $\theta_H$ (Verstellung der Blattwinkel des Heckrotors um den gleichen Betrag).

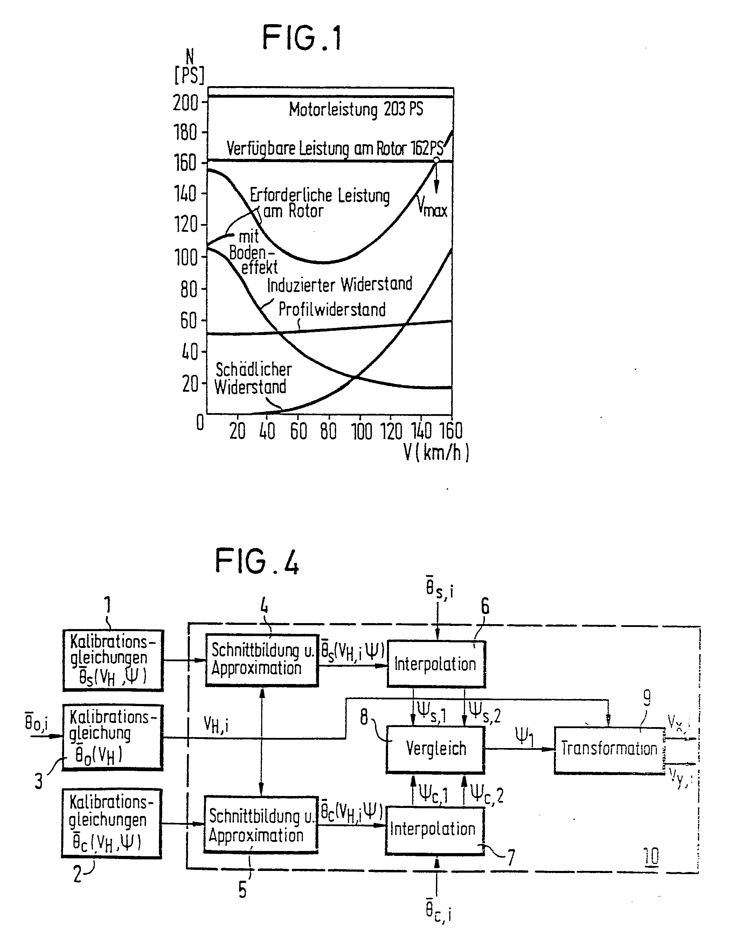

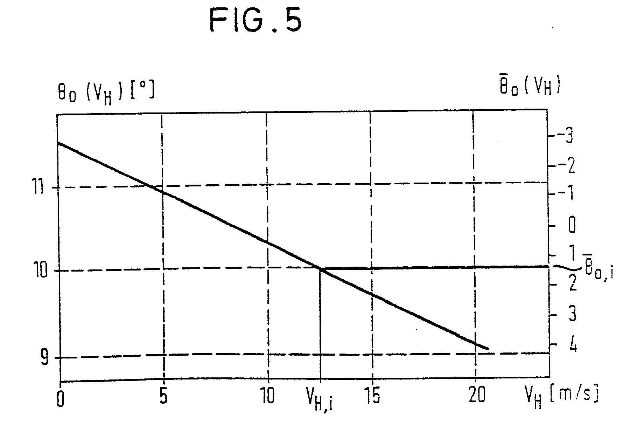

Das Kollektiv $\theta_0$ ist bei konstanter Rotordrehzahl ein Maß für die Leistung des Rotors. Dieser muß im Flug den induzierten, den schädlichen und den Profilwiderstand überwinden. Wie sich aus dem Diagramm der Fig. 1 entnehmen läßt, verhalten sich die beiden zuletzt genannten Widerstände im Niedergeschwindigkeitsbereich nahezu invariant. Der induzierte Widerstand dagegen zeigt mit wachsender Geschwindigkeit eine starke Abnahme. Der Grund dafür liegt in der direkten Luftanströmung, die den Luftanteil, der durch Eigenleistung des Rotors angesaugt werden muß, vermindert. Damit ist die Leistung bzw. das Kollektiv $\theta_0$ im Niedergeschwindigkeitsbereich im wesentlichen ein Maß für die Eigengeschwindigkeit. Das Diagramm der Fig. 5 verdeutlicht ein konkretes, weiter unten näher erläutertes Beispiel für den linearen Zusammenhang zwischen dem Betrag der Geschwindigkeit und dem Kollektiv.

Um dem Hubschrauber eine bestimmte Eigengeschwindigkeit zu verleihen, muß der Schubvektor etwas aus der Vertikalen geneigt werden. Dies erreicht man mit Hilfe der zyklischen Steuerwinkel, d. h. dem Längssteuer $\theta_s$ bzw. dem Quersteuer $\theta_c$. Dadurch, daß die Rotorblätter periodisch angewinkelt werden, neigt sich die Rotorebene bzw. der Schubvektor um einen entsprechenden Betrag. Über den Durchfluß sind beide zyklischen Steuerwinkel miteinander verkoppelt, d. h. bei einer Änderung des Längssteuers muß grundsätzlich auch das Quersteuer aktiviert werden. Der Zusammenhang der Kopplungseffekte ist beispielsweise erläutert in MBB-Bericht VD-260-78, A. Faulkner : « Untersuchungen zu einem Beobachterkonzept für die Windgeschwindigkeit im Schwebe- und Langsamflugbereich von Hubschraubern », Ottobrunn 1979, und/oder in P. R. Payne : « Helicopter Dynamics and Aero Dynamics », Pitman & Sons, London 1959.

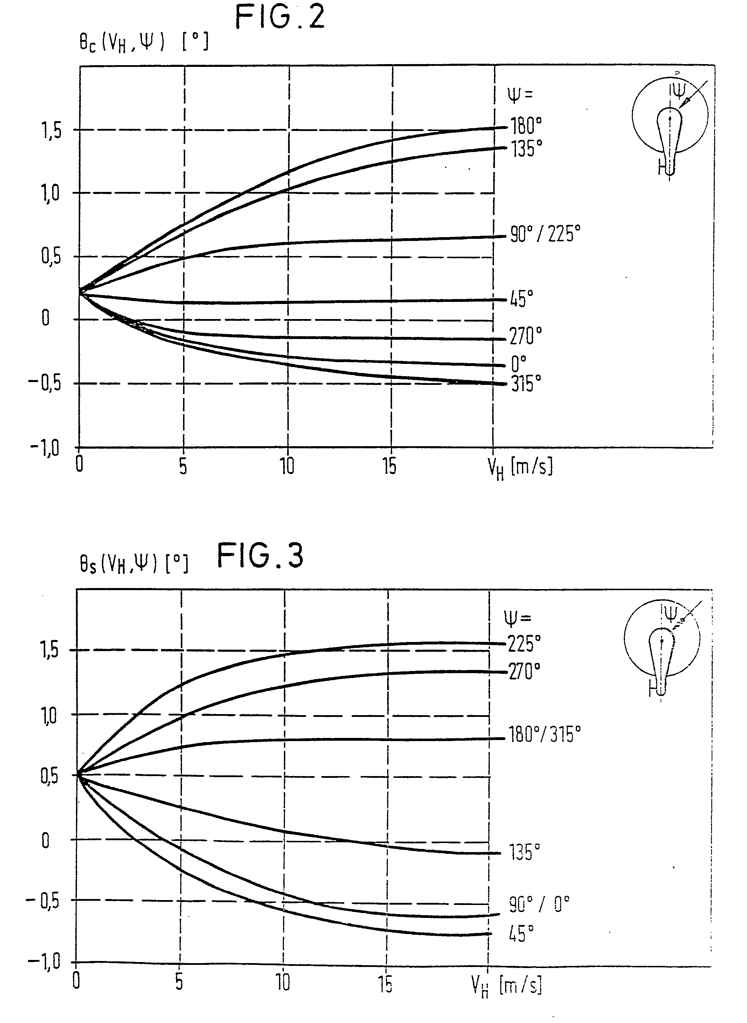

Die Art der Verkopplungen der beiden zyklischen Steuerwinkel $\theta_s$ und $\theta_c$ läßt sich aus den Diagrammen der Fig. 2 und 3 entnehmen, in denen beispielhaft die Winkel- und Geschwindigkeitskurven für verschiedene Anströmrichtungen $\psi$ aufgetragen sind.

Die einzelnen Schritte des erfindungsgemäßen Verfahrens werden nachfolgend unter Bezug auf das Blockdiagramm der Fig. 4 näher erläutert.

Die Steuerfunktionen $\theta_0$, $\theta_s$, $\theta_c$ (auch als « Steuerelemente » bezeichnet) werden durch Meßwertaufnehmer erfaßt. Die Lage dieser Meßwertaufnehmer ist nicht festgelegt. Im einfachsten Fall sind die Steuerhebel mit Potentiometern versehen. Die Winkelwerte $\theta_0$, $\theta_s$, $\theta_c$ müssen nicht bekannt sein. Durch Spannungsgeneratoren (beispielsweise über die erwähnten Potentiometer) gelieferte äquivalente Spannungswerte $\overline{\theta}_0 = f(\theta_0)$, $\overline{\theta}_c = f(\theta_c)$, $\overline{\theta}_s = f(\theta_s)$ sind ausreichend.

Zur Berechnung des Betrags der Horizontaleigengeschwindigkeit $V_{H,i}$ im Block 3 wird der dem Kollektiv entsprechende Spannungswert $\overline{\theta}_{0,i}$ in die zuvor durch Kalibrationsflüge ermittelte und gespeicherte Kalibrationsgleichung (vgl. Fig. 5) eingesetzt, die im niedrigen Geschwindigkeitsbereich (bis 20 m/s) als linear anzusetzen ist.

Die zuvor ebenfalls durch Kalibrierungsflüge ermittelten Kalibrationsgleichungen gemäß den Fig. 2 und 3 die die Beziehung zwischen den periodischen Blattverstellungen und der Eigengeschwindigkeit festlegen, werden unter Berücksichtigung gemessener Temperaturwerte auf durchschnittliche Dichte- bzw. Gewichtswerte bezogen und gespeichert. Zur Bestimmung von Geschwindigkeitsprofilen $\overline{\theta}_s(V_{H,i}, \psi)$ bzw. $\overline{\theta}_c(V_{H,i}, \psi)$ durch Approximation in den Blöcken 4 und 5 wird der im Block 3 errechnete bzw. durch Vergleich ermittelte Betrag der Horizontalgeschwindigkeit $V_{H,i}$ mit den nichtlinearen Kalibrationsgleichungen für $\overline{\theta}_s$ bzw. $\overline{\theta}_c$ verknüpft.

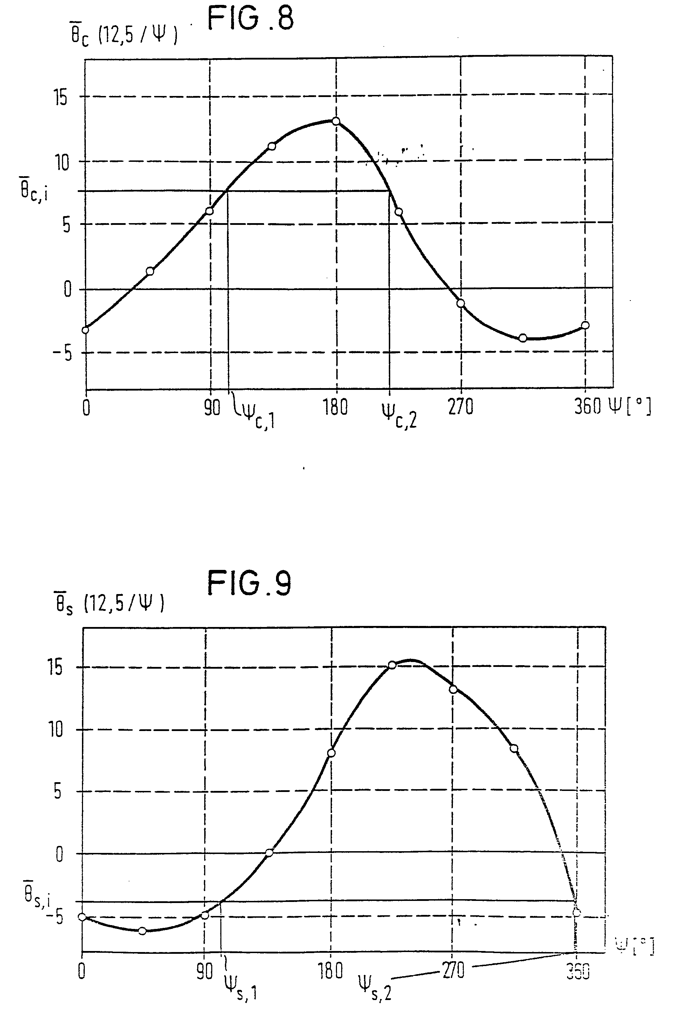

Eine Interpolationsrechnung bzw. eine Schnittbildung der gemessenen Werte von Längssteuer $\overline{\theta}_{s,i}$ bzw. Quersteuer $\overline{\theta}_{c,i}$ mit den berechneten Geschwindigkeitsprofilen von Längs- und Quersteuer erfolgt in den Blöcken 6 bzw. 7. Als Ergebnis erhält man, wie sich aus den Fig. 8 und 9 ersehen läßt, jeweils zwei Winkelwerte $\psi_{s,1}$ und $\psi_{s,2}$ bzw. $\psi_{c,1}$ und $\psi_{c,2}$.

Durch Vergleich der Winkelpaare im Block 8 wird die Doppeldeutigkeit ausgeschaltet, d. h. das Ergebnis ist der Anströmwinkel $\psi_i$, der sich beim Beispiel der Fig. 5 bzw. 8, 9 zu etwa $\psi_i = \psi_{c,1} = \psi_{s,1} \equiv 102°$ ablesen läßt.

Schließlich erfolgt im Block 9 die Berechnung der Komponenten der Horizontalgeschwindigkeit über die Transformationsgleichungen

$$V_{x,i} = V_{H,i} \cos \psi_i$$
$$V_{y,i} = V_{H,i} \sin \psi_i$$

Der wesentliche Kern des Erfindungsgedankens ist als Baueinheit 10 verwirklicht, die durch eine gestrichelte Umrandung verdeutlicht wurde.

Das analytische Verfahren gemäß der Erfindung unterscheidet sich von dem aus der FR-A-2282644 bekannten analytischen System zur Messung der Geschwindigkeit eines Hubschraubers vor allem durch eine wesentliche höhere Genauigkeit und eine einfachere Methode, da Rumpflagewinkel wie Nick- und Rollwinkelwerte zur Geschwindigkeitsbestimmung nicht benötigt werden. Vor allem berücksichtigt dieses in der Fachwelt auch unter der Bezeichnung VIMI (Vitesse Indiquée par Moyens Internes) bekannt gewordene System nicht die Kopplung zwischen Längs- und Quersteuer, die beim Gegenstand der Erfindung ein wesentliches Element de theoretischen Ansatzes bildet.

Im folgenden wird ein praktisches Beispiel für die erfindungsgemäße Methode zur Bestimmung der Horizontaleigengeschwindigkeit von Hubschraubern erläutert.

Im ersten Verfahrensschritt ergeben sich aus der Messung die normierten Spannungswerte für Kollektivlängssteuer und -quersteuer zu

$$\bar{\theta}_{0,i} = 1,4$$
$$\bar{\theta}_{c,i} = 7,7$$
$$\bar{\theta}_{s,i} = -3,9$$

Im zweiten Verfahrensschritt ergibt sich mit dem Kollektivwert $\bar{\theta}_{0,i} = 1,4$ aus dem Diagramm der Fig. 5 der Betragswert für die Horizontalgeschwindigkeit zu

$$V_{H,i} = 12,5 \text{ m/s}$$

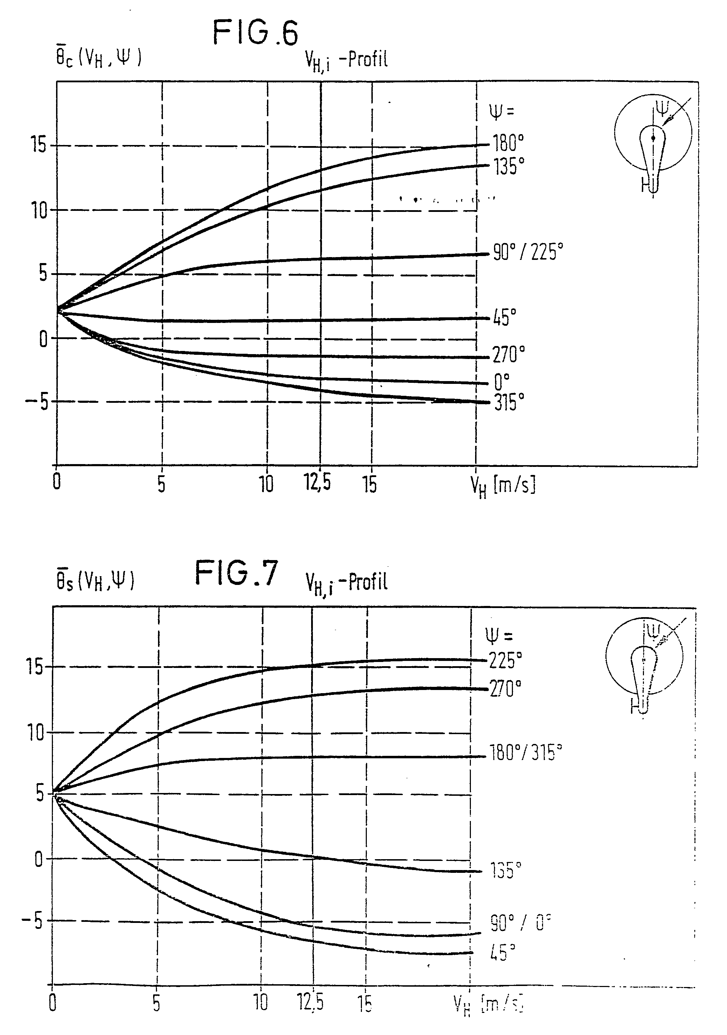

Im dritten Verfahrensschritt wird aus den Kalibrationskurven gemäß Fig. 6 und 7 das Längssteuerprofil $\bar{\theta}_s$ für den Betragswert der Horizontalgeschwindigkeit $V_{H,i} = 12,5$ m/s (vgl. Fig. 9) sowie das Quersteuerprofil $\bar{\theta}_c$ für den Horizontalgeschwindigkeitswert $V_{H,i} = 12,5$ m/s bestimmt (vgl. Fig. 8).

Mit Hilfe der Meßwerte des Längssteuers $\bar{\theta}_{s,i} = -3,9$ bzw. des Quersteuers $\bar{\theta}_{c,i} = 7,7$ (vgl. Verfahrensschritt 1) werden jeweils zwei Phasenwinkelpaare $\psi_{s,1}$ und $\psi_{s,2}$ bzw. $\psi_{c,1}$ und $\psi_{c,2}$ erhalten. Aus dem Vergleich von $\psi_{c,1}$ mit $\psi_{s,1}$ bzw. $\psi_{c,2}$ mit $\psi_{s,2}$ ergibt sich der bereits erwähnte Anströmwinkel $\psi_i = \psi_{c,1} = \psi_{s,1} = 102°$ (vgl. Fig. 8 und 9).

Im letzten Verfahrensschritt werden schließlich die zwei Komponenten der Horizontalgeschwindigkeit errechnet zu

$$V_{x,i} = V_{H,i} \cos \psi_i = -2,6 \text{ m/s}$$
$$V_{y,i} = V_{H,i} \sin \psi_i = +12,2 \text{ m/s}$$

**Patentansprüche**

1. Verfahren zur Bestimmung der Horizontal-Eigengeschwindigkeit von Hubschraubern in niedrigen Geschwindigkeitsbereichen, bei denen eine annähernd lineare Abhängigkeit zwischen dem Kollektiv $\theta_0$ und der Eigengeschwindigkeit V besteht, das folgende Verfahrensschritte aufweist :

— Es werden wenigstens drei Steuerfunktionswerte des Hubschraubers als Meßwerte erfaßt, nämlich
  • der Kollektivwert $\bar{\theta}_{0,i}$,
  • der Längssteuerwert $\bar{\theta}_{s,i}$ und
  • der Quersteuerwert $\bar{\theta}_{c,i}$ ;

— zur Ermittlung des Betrags der Horizontalgeschwindigkeit $V_{H,i}$ wird der Kollektivwert $\bar{\theta}_{0,i}$ mit der zuvor bestimmten und gespeicherten Kollektivgeschwindigkeits-Kalibrationsfunktion verknüpft ;

— zur Bestimmung von Längs- und Quersteuerprofilen $\bar{\theta}_s(V_{H,i}, \psi)$ bzw. $\bar{\theta}_c(V_{H,i}, \psi)$ wird der erhaltene Horizontal-Eigengeschwindigkeitswert $V_{H,i}$ mit einer zuvor ermittelten und gespeicherten Kalibrationsfunktion für die Längs- und Quersteuerwerte $\bar{\theta}_s(V_H, \psi)$ bzw. $\bar{\theta}_c(V_H, \psi)$ verknüpft ;

— zur Ermittlung des Winkelwerts $\psi_i$ der Anströmung werden die Meßwerte $\bar{\theta}_{s,i}$ bzw. $\bar{\theta}_{c,i}$ von Längs- und Quersteuer mit den ermittelten und zwischengespeicherten Längs- und Quersteuerprofilen $\bar{\theta}_s(V_{H,i}, \psi)$ bzw. $\bar{\theta}_c(V_{H,i}, \psi)$ verglichen, und die erhaltenen Winkelpaare $\psi_{s,1}$ und $\psi_{s,2}$ bzw. $\psi_{c,1}$ und $\psi_{c,2}$ werden zur Ausschaltung einer Winkeldoppeldeutigkeit miteinander verglichen, und der beim Vergleich von $\psi_{s,1}$ mit $\psi_{c,1}$ bzw. von $\psi_{s,2}$ mit $\psi_{c,2}$ übereinstimmende Winkelwert liefert den Anströmwinkel $\psi_i$ ;

— die Komponenten der Eigengeschwindigkeit in Hubschrauberlängsachse $V_{x,i}$ bzw. die Komponenten der Eigengeschwindigkeit in Hubschrauberquerachse $V_{y,i}$ werden durch Verknüpfung des Betrags der Horizontalgeschwindigkeit $V_{H,i}$ mit dem Anströmwinkel $\psi_i$ entsprechend den Transformationsgleichungen $V_{x,i} = V_{H,i} \cos \psi_i$ bzw. $V_{y,i} = V_{H,i} \sin \psi_i$ bestimmt.

2. Verfahren nach Anspruch 1, dadurch gekennzeichnet, daß als Steuerfunktionswerte des Hubschraubers die Steuerwinkel gemessen werden.

3. Verfahren nach Anspruch 1, dadurch gekennzeichnet, daß die Steuerfunktionswerte $\bar{\theta}_{0,i}$, $\bar{\theta}_{s,i}$ und $\bar{\theta}_{c,i}$ als äquivalente Strom- oder Spannungswerte des Kollektivs $\theta_0$, des Längssteuers

$\theta_s$ bzw. des Quersteuers $\theta_c$ unmittelbar von mit den entsprechenden Steuerhebeln verbundenen induktiven oder kapazitiven Gebern oder von Spannungsfunktionsgeneratoren geliefert werden.

4. Verfahren nach Anspruch 1, dadurch gekennzeichnet, daß die Steuerfunktionswerte $\theta_{0,i}$, $\bar{\theta}_{s,i}$ und $\bar{\theta}_{c,i}$ als äquivalente digitale Ausgabewerte des Kollektivs $\theta_0$, des Längssteuers $\theta_s$ bzw. des Quersteuers $\theta_c$ von mit den entsprechenden Steuerhebeln verbundenen Drehmeldern oder Resolvern geliefert werden.

5. Verfahren nach einem der vorstehenden Ansprüche, dadurch gekennzeichnet, daß die Kalibrationsfunktionen für den Zusammenhang von Kollektiv $\theta_0$ und Geschwindigkeit einerseits und von Längs- bzw. Quersteuer $\theta_s$ bzw. $\theta_c$ und Geschwindigkeit andererseits durch Kalibrationstestflüge ermittelt und gespeichert werden.

## Claims

1. Method for determining the horizontal airspeed of helicopters in low speed ranges in which an approximately linear dependence exists between the collective angle $\theta_0$ and the airspeed V, which exhibits the following method steps :
— At least three control function values of the helicopter are detected as measurement values, which are
  • the collective value $\bar{\theta}_{0,i}$,
  • the longitudinal control value $\bar{\theta}_{s,i}$ and
  • the lateral control value $\bar{\theta}_{c,i}$ ;
— To determine the amount of the horizontal speed $V_{H,i}$, the collective value $\bar{\theta}_{0,i}$ is combined with the previously determined and stored collective speed calibration function ;
— To determine longitudinal and lateral control profiles $\bar{\theta}_s(V_{H,i}, \psi)$ and $\bar{\theta}_c(V_{H,i}, \psi)$, the horizontal speed value $V_{H,i}$ obtained is combined with a previously determined and stored calibration function for the longitudinal and lateral control values $\bar{\theta}_s(V_H, \psi)$ and $\bar{\theta}_c(V_H, \psi)$, respectively ;
— To determine the angle value $\psi_i$ of the free-stream flow, the measurement values $\bar{\theta}_{s,i}$ and $\bar{\theta}_{c,i}$ of longitudinal and lateral control angles are compared with the longitudinal and lateral control profiles $\bar{\theta}_s(V_{H,i}, \psi)$ and $\bar{\theta}_c(V_{H,i}, \psi)$ determined and temporarily stored, and the angle pairs $\psi_{s,1}$ and $\psi_{s,2}$, and $\psi_{c,1}$ and $\psi_{c,2}$, obtained are compared with one another to eliminate an angular ambiguity, and the angle value coinciding during the comparison of $\psi_{s,1}$ with $\psi_{c,1}$ and $\psi_{s,2}$ with $\psi_{c,2}$ supplies the free-stream angle $\psi_i$ ;
— The components of the airspeed in the longitudinal helicpter axis $V_{x,i}$ and the components of the airspeed in the lateral helicopter axis $V_{y,i}$ are determined by combining the amount of the horizontal speed $V_{H,i}$ with the free-stream angle $\psi_i$ in accordance with the transformation equations $V_{x,i} = V_{H,i} \cos \psi_i$ and $V_{y,i} = H_{H,i} \sin \psi_i$

2. Method according to Claim 1, characterized in that the control angles are measured as control function values of the helicopter.

3. Method according to Claim 1, characterized in that the control function values $\bar{\theta}_{0,i}$, $\bar{\theta}_{s,i}$ and $\bar{\theta}_{c,i}$ are supplied as equivalent current or voltage values of the collective angle $\theta_0$, of the longitudinal control angle $\theta_s$ and of the lateral control angle $\theta_c$, respectively, directly by inductive or capacitive transducers connected to the corresponding control levers or by voltage function generators.

4. Method according to Claim 1, characterized in that the control function value $\bar{\theta}_{0,i}$, $\bar{\theta}_{s,i}$ and $\bar{\theta}_{c,i}$ are supplied as equivalent digital output values of the collective angle $\theta_0$, of the longitudinal control angle $\theta_s$ and of the lateral control angle $\theta_c$, respectively, by synchros or resolvers connected to the corresponding control levers.

5. Method according to one of the preceding Claims, characterized in that the calibration functions for the relationship between collective angle $\theta_0$ and speed, on the one hand, and of longitudinal and lateral control angles $\theta_s$ and $\theta_c$, respectively, and speed, on the other hand, are determined by calibration test flights.

## Revendications

1. Procédé pour la détermination de la vitesse horizontale propre d'un hélicoptère dans le domaine des basses vitesses pour lesquelles il existe une relation à peu près linéaire entre le collectif $\theta_0$ et la vitesse propre V, qui comporte les étapes suivantes :
— Au moins trois valeurs de fonction de commande de l'hélicoptère sont déterminées en tant que valeurs de mesure, à savoir
  • la valeur de pas collectif $\bar{\theta}_{0,i}$,
  • la valeur de pas cyclique longitudinal $\bar{\theta}_{s,i}$ et
  • la valeur de pas cyclique latéral $\bar{\theta}_{c,i}$ ;
— pour la détermination de la valeur de la vitesse horizontale $V_{H,i}$, la valeur de pas collectif $\bar{\theta}_{0,i}$ est combinée avec la fonction de calibrage de la vitesse de pas collectif déterminée et mémorisée préalablement ;
— pour la détermination de profils de pas cyclique longitudinal et latéral $\bar{\theta}_s(V_{H,i}, \psi)$ et respectivement $\theta_c(V_{H,i}, \psi)$, la valeur de vitesse horizontale propre obtenue $V_{H,i}$ est combinée avec une fonction de calibrage préalablement déterminée et mémorisée pour les valeurs de pas cyclique longitudinal et de pas cyclique latéral $\bar{\theta}_s(V_H, \psi)$ et respectivement $\bar{\theta}_c(V_H, \psi)$ ;
— pour la détermination de la valeur angulaire $\psi_i$ du soufflage, les valeurs mesurées $\bar{\theta}_{s,i}$ et respectivement $\bar{\theta}_{c,i}$ du pas cyclique longitudinal et du pas cyclique latéral sont comparées avec les profils de pas cyclique longitudinal et latéral $\bar{\theta}_s(V_{H,i}, \psi)$ et respectivement $\bar{\theta}_c(V_{H,i}, \psi)$ déterminés et bufférisés préalablement, et les paires d'angles obtenues $\psi_{s,1}$ et $\psi_{s,2}$ voire $\psi_{c,1}$ et $\psi_{c,2}$ sont comparées pour éliminer une ambiguïté angulaire, la valeur angulaire concordant lors de la comparaison de $\psi_{s,1}$ avec $\psi_{c,1}$ et respectivement de $\psi_{s,2}$ avec $\psi_{c,2}$ fournissant l'angle de

soufflage $\psi_i$ ;

— les composantes de la vitesse propre dans l'axe longitudinal de l'hélicoptère $V_{x,i}$ et respectivement les composantes de la vitesse propre dans l'axe transversal de l'hélicoptère $V_{y,i}$ sont déterminées en reliant la valeur de la vitesse horizontale $V_{H,i}$ à l'angle de soufflage conformément aux équations de transformation $V_{x,i} = V_{H,i} \cos \psi_i$ et respectivement $V_{y,i} = V_{H,i} \sin \psi_i$.

2. Procédé selon la revendication 1, caractérisé en ce que les angles de pas sont mesurés en tant que valeurs de fonction de commande de l'hélicoptère.

3. Procédé selon la revendication 1, caractérisé en ce que les valeurs de fonction de commande $\overline{\theta}_{0,i}$, $\overline{\theta}_{s,i}$ et $\overline{\theta}_{c,i}$ sont fournies directement, en tant que valeurs de courant ou de tension équivalentes du pas collectif $\theta_0$, du pas cyclique longitudinal $\theta_s$ et respectivement du pas cyclique latéral $\theta_c$,

par des capteurs inductifs ou capacitifs reliés aux leviers de commande correspondants ou par des générateurs de fonction de tension.

4. Procédé selon la revendication 1, caractérisé en ce que les valeurs de fonction de commande $\overline{\theta}_{0,i}$, $\overline{\theta}_{s,i}$ et $\overline{\theta}_{c,i}$ sont fournies en tant que valeurs de sortie numériques équivalentes du pas collectif $\theta_0$, du pas cyclique longitudinal $\theta_s$ et respectivement du pas cyclique latéral $\theta_c$ par des transmetteurs synchrones ou résolveurs reliés aux leviers de commande correspondants.

5. Procédé selon l'une quelconque des revendications 1 à 4, caractérisé en ce que les fonctions de calibrage pour la relation entre le pas collectif $\theta_0$ et la vitesse, d'une part, et le pas cyclique longitudinal et respectivement latéral $\theta_s$ et respectivement $\theta_c$ et la vitesse, d'autre part, sont déterminées par des vols d'essai de calibrage et mémorisées.

# FIG.1

# FIG.4

## FIG.2

$\theta_c(V_H, \Psi)$ [°]

$\Psi =$
180°
135°
90° / 225°
45°
270°
0°
315°

$V_H$ [m/s]

## FIG.3

$\theta_s(V_H, \Psi)$ [°]

$\Psi =$
225°
270°
180°/315°
135°
90° / 0°
45°

$V_H$ [m/s]

# FIG.5

# FIG.6

$\bar{\theta}_c (V_H, \Psi)$        $V_{H,i}$ -Profil

# FIG.7

$\bar{\theta}_s (V_H, \Psi)$        $V_{H,i}$ -Profil

# FIG.8

# FIG.9